(19) **Europäisches Patentamt**

**European Patent Office**

**Office européen des brevets**

(11) **EP 0 401 415 B2**

(12) **NEUE EUROPÄISCHE PATENTSCHRIFT**

(45) Veröffentlichungstag und Bekanntmachung des Hinweises auf die Entscheidung über den Einspruch:
**03.06.1998 Patentblatt 1998/23**

(51) Int. Cl.⁶: **B23H 1/02**

(45) Hinweis auf die Patenterteilung:
**17.03.1993 Patentblatt 1993/11**

(21) Anmeldenummer: **89110458.0**

(22) Anmeldetag: **09.06.1989**

(54) **Generator zum funkenerosiven Schneiden von metallischen Werkstücken mittels einer aus flüssigem oder festem Material bestehenden Elektrode**

Power supply for the spark erosion cutting of metal work pieces by means of an electrode made of liquid or solid material

Générateur pour la découpe par électro-érosion de pièces métalliques au moyen d'une électrode en matériau liquide ou solide

(84) Benannte Vertragsstaaten:
**AT BE CH DE ES FR GB GR IT LI LU NL SE**

(43) Veröffentlichungstag der Anmeldung:
**12.12.1990 Patentblatt 1990/50**

(73) Patentinhaber: **RABIAN, Laszlo**
**1023 Crissier (CH)**

(72) Erfinder: **RABIAN, Laszlo**
**1023 Crissier (CH)**

(74) Vertreter: **Luchs, Willi et al**
**Luchs & Partner,**
**Patentanwälte,**
**Schulhausstrasse 12**
**8002 Zürich (CH)**

(56) Entgegenhaltungen:
**DE-A- 2 547 767**

• **DAUW, SNOEYS, JENNES, VANHERCK: "HIGH SPEED PULSE DISCRIMINATION FOR REAL-TIME EDM ANALYSIS" Katholieke Universiteit Leuven, Celestijnlaan, 300B, B 3030 Heverlee (Belgium)**

## Beschreibung

Die Erfindung betrifft einen Generator zum funkenerosiven Schneiden gemäss Oberbegriff des Patentanspruchs 1.

In der Funkenerosionstechnik werden verschiedene Impulsgeneratoren je nach Aufgabe eingesetzt. Beim funkenerosiven Schneiden benutzt man hauptsächlich deionisiertes Wasser als Dielektrikum wegen seiner guten Eigenschaften, besonders im Hinblick auf die guten Abtragseigenschaften am Werkstück. Zur Erzielung eines maximalen Materialabtrages werden besondere Eigenschaften des Impulsgenerators verlangt.

Die bekannten Impulsgeneratoren haben bei Verwendung von deionisiertem Wasser als Dielektrikum im Arbeitsspalt den Nachteil, dass der mögliche maximale Materialabtrag pro Einheit der Entladungsenergie nicht erreicht werden kann, weil die Impulsdauer nicht wesentlich kurzer als 1 Mikrosekunde und die Abfallflanke des Stromimpulses nicht genügend steil gemacht werden können. Dies resultiert daher, dass die im Hauptstromkreis des Impulsgenerators zur Strombegrenzung und Stromregelung benutzten elektrischen Leistungselemente eine solch kurze Impulsdauer und eine solch steile Abfallflanke nicht nachvollziehen können.

In dem deutschen Patent 2'735'403 ist ein Impulsgenerator für das Drahtschneiden beschrieben, welcher Kurzimpulse von einer Mikrosekunde und hohe Ströme von mehreren hundert Ampère liefern kann. Eine weitere Verkürzung der Impulse und eine weitere Erhöhung der Steilheit der Abfallflanke ist wegen der Streuinduktivitäten der Leistungswiderstände nicht mehr möglich. Ferner weist dieser Impulsgenerator wegen der erwähnten Leistungswiderstände eine wirtschaftlich unerträglich hohe Verlustleistung auf.

Zur Vermeidung dieser Nachteile ist im europäischen Patent 160'989 ein Impulsgenerator beschrieben, der einen guten Wirkungsgrad hat, weil er anstelle der Leistungswiderstände Induktivitäten im Hauptstromkreis aufweist. Aus diesem Grunde können mit diesem Generator auch nicht die erwünschte kurze Impulsdauer und auch nicht die Steilheit der Abfallflanke des Stromimpulses so verbessert werden, dass die Impulsdauer bei 0,1 Mikrosekunde und die Abfallflanke des Stromimpulses über 1000 Ampères pro Mikrosekunde liegen. Dies hängt damit zusammen, dass der Arbeitsstrom mindestens über fünf Schaltelemente fliessen muss.

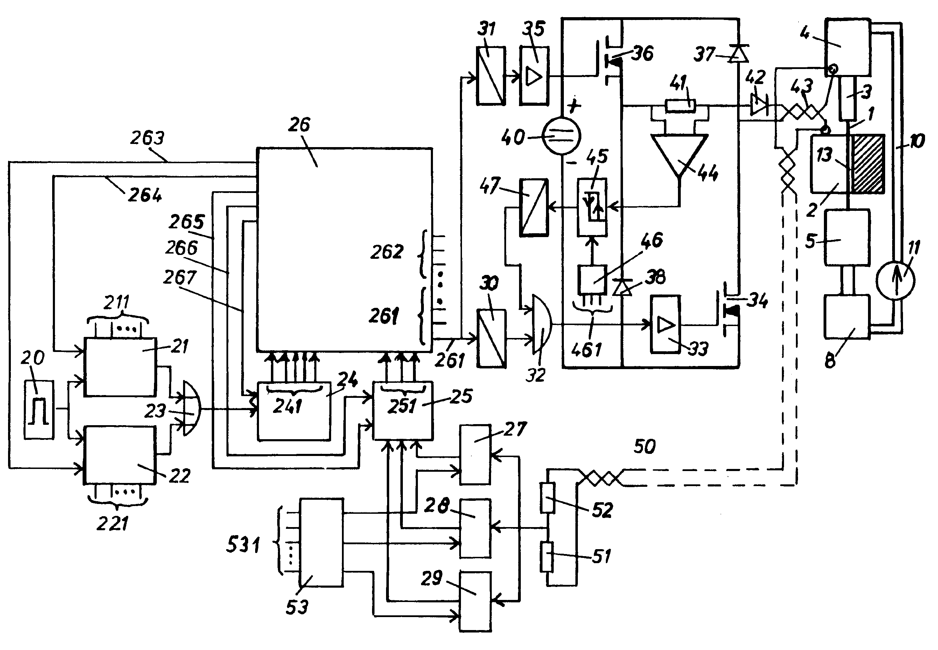

Bei einem Generator nach der Druckschrift JP-A 64-11713 der dem Generator nach dem Oberbegriff des Anspruchs 1 entspricht ist ein Hauptstromkreis gebildet, der drei parallele Strompfade enthält, von denen der eine Strompfad eine Spannungsquelle und die beiden anderen mit dem Arbeitsspalt verbundenen Strompfade je einen Transistor und Diode in bestimmter Durchlassrichtung für den den Arbeitsspalt durchwandernden Impulsstrom aufweisen. In dem Hauptstromkreis sind Induktivitäten vorgesehen. Die beiden Transistoren werden mittels eines Generators entsprechend Fig.2 betätigt. Im wesentlichen wird dazu die Spannung zwischen dem Werkstück und der Elektrode mit einer Vergleichsspannung verglichen und parallel mittels eines Impulsgeneratorschaltkreises die Entladungsperiode sowie die Pausenzeiten festgelegt. Im weiteren sind Vorrichtungen für die Steuerung des Ein- und Ausschaltens, eine Schaltung sowie ein nachfolgender Multivibrator für die Initialisierung eines Impulses sowie weitere Schaltelemente vorgesehen. Bei diesem Generator ist keine Messung der fortlaufenden Stromstärke des Impulses integriert, sondern die Stromstärke wird durch eine Programmierung festgelegt. Dies lässt sich nur durch eine relativ aufwendige Steuerung realisieren. Bei Abweichung der effektiven Stromstärke zu der vorprogrammierten kann mit dieser bekannten Generatoranordnung nicht genügend schnell reagiert werden.

Es ist Aufgabe der Erfindung, die Nachteile der bekannten Impulsgeneratoren insbesondere für das funkenerosive Schneiden zu vermeiden und ferner zu gewährleisten, dass eine Impulsdauer bis hinunter zu 100 Nanosekunden und eine Steilheit der Abfallflanke des Stromimpulses bis einige 1000 Ampères pro Mikrosekunde erreicht werden. Hierdurch wird der Materialabtrag pro Einheit der Entladungsenergie erhöht. Ferner wird mit der Erfindung bezweckt, dass infolge der schnellen Stromabschaltung die schädliche Wirkung von Kurzschlussimpulsen und von sich bildenden Lichtbogen auf den Oberflächen von Werkstück und Elektrode nicht auftreten können. Bekanntlich folgen funkenerosive Entladungen einer stochastischen Gesetzmässigkeit. Die Wirkimpulse, Leerlaufimpulse, Kurzschlussimpulse und entartete Impulse (z.B. Lichtbogen) sind statistisch verteilt. Ihre Reihenfolge ist unkorreliert. Die Kurzschluss- und entarteten Impulse verschlechtern bekanntlich die Oberflächenintegrität des Werkstückes und sind Verursacher des grössten Teils des Verschleisses an der Elektrode. Bei einer Drahtelektrode bedeutet dies eine hohe Drahtgeschwindigkeit und die Gefahr eines Drahtrisses. Die Erfindung vermeidet diese Probleme.

Die Aufgaben werden erfindungsgemäss durch die Merkmale des Patentanspruchs 1 gelöst.

Die einzige Figurzeigt ein Schaltungsbild des erfindungsgemässen Impulsgenerators. Es handelt sich hierbei um eine Prinzipschaltung, die in Details geändert werden kann, was später noch näher erläutert wird.

Das Ausführungsbeispiel stellt eine Maschine zum funkenerosiven Schneiden dar, die aus dem Impulsgenerator und der Schneidvorrichtung besteht.

Zuerst wird die Schneidvorrichtung beschrieben, an die der erfindungsgemässe Impulsgenerator die Arbeitsimpulse liefert. Zum Schneiden des Werkstückes 2 wird eine Strahlelektrode 1 verwendet, die in der europäischen Patentanmeldung Nr. 292 440 näher beschrieben ist. Daher wird im Folgenden nur noch kurz auf die Strahlelektrode und die für sie notwendigen Geräte eingegangen. Die Strahlelektrode besteht aus einem flüssigen im Druckbehälter 4 untergebrachten Medium, wie z.B. Quecksilber. Die am Druckbehälter angebrachte Düse 3 gibt der Strahlelektrode 1 den gewünschten Querschnitt, z.B. kreisförmig. Unter hohem Druck tritt die Elektrode 1 aus der Düse 3 in Form eines Strahles aus. Diese als Strahl ausgebildete Elektrode wird zum Schneiden des Werkstückes 2 verwendet. Strahlelektrode 1 und Werkstück 2 werden mittels einer nicht gezeichneten Führungsvorrichtung in eine relative Bewegung zueinander versetzt. Strahlelektrode und Werkstück werden also in gewünschte Bahnen zueinander bewegt, so dass gewünschte Konturen aus dem Werkstück geschnitten werden. Der Vollständigkeit halber sei noch erwähnt, dass Strahlelektrode 1 und Werkstück 2 immer durch den Arbeitsspalt 13 voneinander getrennt sind, in welchem sich in bekannter Weise ein Dielektrikum befindet. Das Dielektrikum ist im vorliegenden Fall deionisiertes Wasser.

Sollten Strahlelektrode und Werkstück sich zu nahe kommen oder gar berühren, so ergeben sich nicht gewünschte entartete Impulse bzw. Kurzschlüsse. Bei grösserem Arbeitsspalt ergeben sich nicht gewünschte Leerlaufimpulse. Bekanntlich folgen die impulsförmigen Entladungen im Arbeitsspalt 13 einer stochastischen Gesetzmässigkeit. Wirkimpulse, Kurzschlussimpulse, Leerlaufimpulse, entartete Impulse (Lichtbogen) sind statistisch verteilt. Ihre Reihenfolge ist unkorreliert. Die Kurzschlussimpulse und entarteten impulse verschlechtern die Oberfläche des Werkstückes und verursachen den nicht gewünschten Verschleiss an der Elektrode. Letzteres gilt jedoch nur für eine Elektrode aus festem Material, wie z.B. Kupfer, Messing, Stahl. Bei der im vorliegenden Ausführungsbeispiel verwendeten Strahlelektrode 1 tritt der Verschleiss nicht auf. Die Strahlelektrode 1 kommt unter hohem Druck aus der Düse 3, gelangt in den Arbeitsspalt 13 des Werkstückes 2, schneidet die gewünschte Kontur im Werkstück 2 und verschwindet in der Auffangvorrichtung 5. Das flüssige Elektrodenmaterial wird im anschliessenden Filter 8 gereinigt und mittels der Pumpe 11 über die Druckleitung 10 in den Druckbehälter 4 befördert, wo das Material zur nächsten Verwendung zur Verfügung steht.

Der erfindungsgemässe Impulsgenerator, welcher sowohl Impulse von extrem kurzer zeitlicher Dauer (bis hinunter zu 100 Nanosekunden) mit besonders steiler Abfallflanke (bis einige 1000 Ampères pro Mikrosekunde) erzeugt als auch in den Arbeitsspalt 13 überträgt, besteht aus einem Signalkreis zur Erzeugung der Impulssignale und einem vom Signalkreis angesteuerten Hauptstromkreis zur Erzeugung der Arbeitsimpulse für den Arbeitsspalt.

Im Signalkreis sind angeordnet eine Impulsquelle 20 mit einer Impulsrepetitionsfrequenz zwischen 10 MHz und 50 MHz und Frequenzuntersetzerstufen 21, 22, deren Ausgänge auf ein ODER-Tor 23 gelangen. Die Impulsquelle 20 ist z.B. als Quarzoszillator bei der Firma SARONIX unter der Bestell-Nr. NCT-070C40 erhältlich.

Die beiden Untersetzerstufen, von denen die eine 21 für den Signalimpuls und die andere 22 für die Pause zwischen zwei Signalimpulsen vorgesehen sind, können z.B. unter der Beste-Nr. SN74/LS292 von der Firma TEXAS Instruments bezogen werden. Jede der beiden Untersetzerstufen ist mit Eingängen 211 oder 221 ausgerüstet. Die Eingänge 211 steuern im Untersetzer 21 die gewünschte untersetzte Frequenz für die Impulssignale. Die Eingänge 221 steuern im Untersetzer 22 die gewünschte untersetzte Frequenz für die Pausesignale. Ueber die Ausgänge 263, 264 des Festwertspeichers 26 ist gewährleistet, dass die Impulssignale und Pausesignale zu unterschiedlichen Zeiten über das ODER-Tor 23 auf einen Binärzähler 24 gelangen, so dass sie sich nicht gegenseitig behindern. Ferner ist über die Ausgänge 263, 264 in Zusammenwirken mit dem Zähler 24 sichergestellt, dass eine bestimmte Anzahl der Impulssignale oder der Pausesignale zeitlich hintereinander auf den Binärzähler 24 gelangen und somit die Breite eines Impulses oder einer Pause bilden. Mit anderen Worten bedeutet dies, dass jedes Impulssignal ein Impulselement und jedes Pausesignal ein Pauseelement darstellt. Eine bestimmte Anzahl von Elementen ergeben die Breite des Impulses bzw. der Pause. Jedes Element wird im Binärzähler addiert. Der jeweilige Elementinhalt des Binärzählers 24 bildet durch seine Ausgänge 241 einen ersten Teil einer Zeilenadresse in Binärform für den Festwertspeicher 26. Der zweite Teil der Zeilenadresse, ebenfalls in Binärform, wird dem Festwertspeicher 26 durch die Ausgänge 251 eines Speichers 25 geliefert. Der zweite Teil der Zeilenadresse beinhaltet die jeweiligen elektrischen Zustände bzw. Verhältnisse im Arbeitsspalt 13, was später noch näher erläutert wird. Der Binärzähler 24 ist für hohe Frequenzen (z.B. 10 MHz bis 50 MHz) konstruiert und kann z.B. als integrierte Schaltung über TEXAS Instruments unter der Bestell-Nr. SN74/AS869 bezogen werden. Im gezeichneten Ausführungsbeispiel des Signalkreises hat der Binärzähler fûnf mit dem Festwertspeicher 26 verbundene Ausgänge 241, so dass er 32 unterschiedliche Adressen im Binärcode erzeugen kann; d.h. mit anderen Worten, er kann bis zu 16 Impulselemente zu einem einzigen Impuls bzw. bis zu 16 Elemente zu einer einzigen Pause addieren. Wenn gewünscht, kann die Anzahl der Ausgänge 241 und somit auch der Elemente erhöht oder erniedrigt werden. Im vorliegenden Ausführungsbeispiel sind 16 Elemente für einen Impuls und 16 Elemente für eine Pause gewählt. Dies gilt bei einer symmetrischen Aufteilung zwischen Impuls und Pause. Bei einer unsymmetrischen

Aufteilung können z.B. 6 Elemente für den Impuls und z.B. 16 Elemente für die Pause vorgesehen werden. Jedem Element ist ein bestimmtes Zeitelement t1, t2, t3, t4 ....... tN zugeordnet. Bei jedem Element bzw. bei jedem Zeitelement erfolgt die Adressierung für die Speicherplätze im Festwertspeicher 26. Jeder Impuls bzw. jede Pause wird so oft adressiert wie viele Elemente zu einem Impuls oder zu einer Pause zusammengefasst sind.

Für die statistische Auswertung von Impulsen, welche während der funkenerosiven Bearbeitung in einem Arbeitsspalt auftreten, ist ein Detektionskreis im Jahre 1977 bekannt geworden. Siehe Vortrag "Analysis of the EDM Process", von R. Snoeys, H Cornelessen, J.B. Kruth, gehalten am "The international Symposium for Elektromachining (ISEM) in Wolfberg, Schweiz, vom 21. Juni bis 24. Juni 1977, veröffentlicht in der Publikation "Proceeding ISEM 5", Juris Druck und Verlag Zürich, Schweiz. Der bekannte Detektionskreis besteht aus einem Kathodenstrahloszillographen und einem Plotter, der am Arbeitsspalt angeschlossen die Impulse analog zeichnet. Dieser Detektionskreis wurde im Jahre 1977 nur zur Darstellung von Impulsen verwendet und nicht zum Beeinflussen derselben. Für diesen Zweck ist der Plotter zu langsam. Für die Erfindung, welche ein Abfragemittel verlangt, das die am Arbeitsspalt 13 erscheinenden Impulse mehrmals pro Impulsdauer digital abfragt und mit anderen später noch näher beschriebenen Bauelementen beeinflusst, kann der bekannte Detektionskreis nicht verwendet werden.

Das für die Erfindung vorgesehene Abfragemittel 27, 28, 29, 50, 51, 52, 53 enthält andere Bauelemente, wobei der bereits oben erwähnte Speicher 25 über seine Ausgänge 251 den zweiten Teil der Zeilenadresse für den Festwertspeicher 26 liefert. Die Leitungen 50 des Abfragemittels verbinden den Druckbehälter 4 der Strahlelektrode 1 und das Werkstück einerseits über Widerstände 51, 52 mit drei Komparatoren 27, 28, 29 andererseits. Die am Arbeitsspalt 13 auftretenden Arbeitsimpulse werden über die Leitung 50 auf die Komparatoren geleitet. Jeder der Komparatoren ist für ein bestimmtes Niveau der Amplitude der Arbeitsimpulse vorgesehen. Diese Aussage kann als Spannungs signal gemacht werden. Der Komparator 27 detektiert z.B. die hohe Zündspannung $U_H$. Der nächste Komparator 28 detektiert z.B. die kleinere Brennspannung $U_X$. Der dritte Komparator 29 detektiert die Kurzschlussspannung $U_L$. Diese drei Spannungswerte charakterisieren die am Arbeitsspalt 13 vorkommenden Impulstypen, wie z.B. Wirkimpulse mit hoher Zündspannung am Anfang und kleiner Brennspannung, Kurzschlussimpulse, entartete Impulse, wie z.B. Leerlaufimpulse oder Impulse, welche während ihrer Breite bzw. ihrer zeitlichen Dauer von einem Typ zu einem anderen Typ wechseln. Es können selbstverständlich mehr als drei Spannungswerte zur Charakterisierung der Arbeitsimpulstypen herangezogen werden. Dies bedingt dann eine entsprechend höhere Anzahl von Komparatoren. Jeder der Komparatoren 27, 28, 29 ist gleich konstruiert und kann bei Firma TEXAS Instruments als integrierte Schaltung mit digitalem Ausgang für den Speicher 25 unter der Bestell-Nr. TL712 bezogen werden. Der Frequenzbereich liegt zwischen 10 MHz und 50 MHz. Die Komparatoren vergleichen laufend die am Arbeitsspalt 13 auftretenden Spannungswerte mit den SOLL-Werten, welche jedem Komparator von den zugeordneten Digital/Analog-Wandler 53 über den analogen Komparatoreingang zugeführt werden. Der Einfachheit halber ist nur ein solcher Wandler in der Zeichnung dargestellt. Die gewünschten Spannungswerte der Arbeitsimpulse, die am nichtgezeichneten Bedienpult oder in der nicht gezeichneten CNC-Steuerung des erfindungsgemässen Impulsgenerators eingestellt werden, werden über die Eingänge 531 in die Wandler 53 gegeben. Die Digital/Analog-Wandler 53 können bei der Firma TEXAS Instruments als integrierte Schaltungen unter der Bestell-Nr. TLC75224 bezogen werden. An den Ausgängen der Komparatoren 27, 28, 29 sind laufend die Ergebnisse der Vergleiche in digitaler Signalform vorhanden, und zwar in folgender Weise:

Arbeitsspannung < SOLL Wert = High Signal

Arbeitsspannung > SOLL Wert = Low Signal

Diese Signale gelangen als Eingänge in den Speicher 25, der sie während der Zeitelemente t1, t2, t3, t4 ...... tN abfragt und adressiert. Das erfolgt über das Uebernahmesignal 265 und Sperrsignal 266 aus dem Festwertspeicher 26. Bei jedem Zeitelement t1, t2, t3, t4 ...... tN steht ein Uebernahmesignal am Speicher 25, der die Werte aus den Komparatoren 27, 28, 29 übernimmt, adressiert und als zweiten Adressenteil zusammen mit dem ersten Adressenteil in den Festwertspeicher gibt. Am Ende eines aus mehreren Elementen zusammengesetzten Impulssignales und Pausesignales erscheint das Sperrsignal 266 aus dem Festwertspeicher, das den Speicher sperrt und rücksetzt. Der Festwertspeicher erzeugt zur gleichen Zeit ein weiteres Sperrsignal 267, welches den Zähler 24 sperrt und rücksetzt. Die Sperrung des Zählers 24 und des Speichers 25 wird durch das nächste Element wieder aufgehoben.

Der Festwertspeicher 26 ist programmierbar (PROM) und kann z.B. als integrierte Schaltung bei der Firma TEXAS Instruments unter der Bestell-Nr. TBP38S22 bezogen werden. Seine Spalten werden programmiert und seine Zeilen werden durch Zähler 24 und Speicher 25 adressiert. Die binärcodierten Ausgangssignale von Zähler 24 und Speicher 25, die über acht Leitungen in den Festwertspeicher 26 gegeben werden, ergeben eine Anzahl von 256 Adressen im Festwertspeicher, was für das vorliegende Ausführungsbeispiel des Impulsgenerators mehr als ausreichend ist. Auf besonderen Wunsch kann die Anzahl der Speicherplätze erhöht oder erniedrigt werden. Im gezeichneten Festwertspeicher 26 weisen die Speicherplätze ein bestimmtes Programm-Muster auf. Nur diejenigen Speicherplätze sind mit einem Inhalt programmiert, welche der Entwicklung von gewünschten Arbeitsimpulsen entsprechen, die in der Praxis einen sehr guten elektroerosiven Abtrag am Werkstück 2 bringen. Die anderen Speicherplätze entsprechen der Entwicklung von Arbeitsimpulsen, welche einen geringen oder keinen elektroerosiven Abtrag am Werkstück 2 bringen oder welche Elektrode und Werkstück 2 stören können, und haben daher keinen Inhalt, was einer Pause gleichgesetzt ist. Auf diese Weise sind sämtliche in der Praxis vorkommende Wirk-, Kurz-, Leerlauf- und entartete Impulse sowie die Uebergänge zwischen den einzelnen Impulstypen berücksichtigt, die in Arbeitsspalt 13 vorkommen können. Der Festwertspeicher 26 erzeugt nur dann ein Hochsignal (H) an seinem Ausgang 261, wenn jeder der vom Zähler 24 und Speicher 25 adressierten Speicherplätze einen programmierten Inhalt enthält. Wenn bei diesen angesteuerten Speicherplätzen nur ein einziger Speicherplatz keinen Inhalt hat, erzeugt der Festwertspeicher 26 an seinem Ausgang 261 ein Tiefsignal (L). Das Ausgangssignal 261 gelangt in den Hauptstromkreis 30 bis 46, der bei einem Hochsignal (H) einen Arbeitsimpuls für den Arbeitsspalt 13 erzeugt (elektronische Schalter 34, 36 sind in leitendem Zustand) und bei einem Tiefsignal (L) keinen Arbeitsimpuls erzeugt (elektronische Schalter 34, 36 sind in gesperrtem Zustand). Das Ausgangssignal definiert die zeitliche Dauer eines Arbeitsimpulses und einer Impulspause im Arbeitsspalt. Da Zähler 24 jeden Signalimpuls und jede Signalimpulspause so oft adressiert wie viel Elemente bzw. Zeitelemente t1, t2, t3, t4 ...... tN vorhanden sind (bestimmt durch die Untersetzerstufen 21, 22), und der Speicher 25 im gleichen Rhythmus (Uebernahmesignal 265, Rückstellsignal 266) die Werte über den aktuellen Zustand der elektrischen Verhältnisse im Arbeitsspalt 13 adressiert, werden in jedem Zeitelement t1, t2, t3, t4 ...... tN bestimmte Speicherplätze des Festwertspeichers 26 angesteuert, deren Inhalte entscheiden, ob ein Hochsignal (H) oder ein Tiefsignal (L) am Ausgang 261 erscheint. Dies Zusammenarbeiten von Zähler 24, Speicher 25 und Festwertspeicher 26 bringt den Vorteil, dass der elektrische Zustand im Arbeitsspalt 13 mehrere Male während einer Impulsdauer und einer Impulspause abgefragt wird. Das Ausgangssignal 261 stellt in jedem Zeitelement t1, t2, t3, t4 ...... tN das Ergebnis des Abfragens dar. Wenn der elektrische Zustand im Arbeitsspalt in Ordnung ist, wird in jedem Zeitelement das gleiche Ausgangssignal gegeben. Wenn der elektrische Zustand im Arbeitsspalt sich ändert, so ändert sich das Ausgangssignal in dem Zeitpunkt, in welchem die Zustandsänderung auftritt Dies geschieht innerhalb von 200 Nanosekunden. Dies bedeutet, dass schon am Anfang eines Arbeitsimpulses oder einer Impulspause die richtigen Gegenmassnahmen mittels des Ausgangssignales 261 des Festwertspeichers 26 getroffen werden. Mit anderen Worten kann gesagt werden, dass die Tendenz zur Aenderung eines guten Arbeitsimpulses in die unerwünschte schlechte Richtung sofort erkannt und gestoppt wird. Hierdurch kommen unerwünschte Arbeitsimpulse, welche den Abtrag am Werkstück 2 vermindern oder sogar verhindern bzw. welche den Verschleiss an der Elektrode erhöhen, gar nicht zur Geltung, so dass der maximale Abtrag pro Einheit der Entladungsenergie erreicht wird.

Der Festwertspeicher 26 enthält nicht nur den beschriebenen Ausgang 261, sondern mehrere, gestrichelt gezeichnete Ausgänge 261. Diese gestrichelten Ausgänge sind für weitere Hauptstromkreise vorgesehen, die parallel zu dem gezeichneten Hauptstromkreis liegen. Diese Anordnung ist für mehrere parallel geschaltete Elektroden 1 und für ein Werkstück 2 oder für mehrere parallel geschaltete Elektroden 1 und mehrere parallel geschaltete Werkstücke 2 gedacht. Im ersten Fall arbeiten mehrere Elektroden und ein Werkstück zusammen. Im zweiten Fall arbeiten mehrere Elektroden und mehrere Werkstücke paarweise zusammen. Wenn mehrere Hauptstromkreise parallel geschaltet sind, hat jeder Hauptstromkreis eine Entkopplungsdiode 42 am Anfang der Zuleitung 43 zur Elektrode und zum Werkstück.

Der Festwertspeicher 26 enthält weitere Ausgänge 262, auf denen Synchronisationssignale für z.B. einen adaptiven Servovorschub der Elektrode 1 und/oder des Werkstücks 2 vorgesehen werden können. Dieser Servovorschub (adaptive servo control), der nicht gezeichnet ist, hat die Aufgabe, bei fortschreitendem elektroerosivem Abtrag am Werkstück 2 z.B. die Elektrode vorzuschieben, so dass der gleiche Arbeitsspalt 13 beibehalten wird. Die Höhe der Brennspannung der den Abtrag bewirkenden Arbeitsimpulse wird durch getastete Analogverstärker (sample and hold amplifiers) erfasst, welche Verstärker das Ausgangssignal 262 für ein Aquisitions-Zeitfenster benötigen. In diesem Zeitfenster darf nur die Brennspannung aber nicht der Anfang und das Ende des Arbeitsimpulses (Zündzeitverzug und Ausschaltflanke) enthalten sein. Solche Ausgangssignale 262 sind im Festwertspeicher 26 einfach zu programmieren.

Nun wird die Wirkungsweise des Hauptstromkreises erklärt. Wie schon mehrfach erwähnt, steuert das Ausgangssignal 261 des Festwertspeichers 26 die Erzeugung der Arbeitsimpulse im Hauptstromkreis durch das Leitendmachen der beiden schnellen elektronischen Schalter 34 und 36. Die Schalter 34, 36 sind nur so lange im leitenden Zustand wie das Ausgangssignal 261 vorhanden ist. Bei nicht existierendem Ausgangssignal sind die Schalter 34, 36 gesperrt, so dass im Arbeitsspalt 13 kein Arbeitsimpuls existieren kann. Dies gilt auch bei einer Entwicklung zu unerwünschten Typen des Arbeitsimpulses.

Der Hauptstromkreis ist so aufgebaut, dass die Arbeitsimpulse die vorgegebene SOLL-Stromamplitude aufrechterhalten und eine extrem steile Abstiegsflanke haben. Dies wird im folgenden näher erläutert. Bei Vorhandensein des Ausgangssignals 261 wird das Signal über ein galvanisches Trennelement 30, 31 für hohe Signalfrequenzen, das z.B. als ein faseroptischer Signalübertrager, als ein optischer Signalkoppler oder als ein Signaltrenntransformator konstruiert sein kann, aufden Verstärker 35 und das UND-Tor 32 gegeben. Der Verstärker 35 steuert den elektronischen Schalter 36 in den leitenden Zustand. Der Schalter 36 kann ein MOSFET-Transistor oder eine MOSFET-Transistorgruppe sein. Das UND-Tor 32 steuert über Verstärker 33 den anderen elektronischen Schalter 34, der ebenfalls ein MOSFET-Transistor oder eine MOSFET-Transistorgruppe sein kann und für hohe Frequenzen ausgelegt ist, nur dann in den leitenden Zustand, wenn am anderen Eingang des UND-Tores 32 zur gleichen Zeit eine Spannung anliegt. Dies ist immer dann der Fall, wenn die Stromwerte des Arbeitsimpulses unterhalb eines vorgegebenen SOLL-Wertes liegen, was durch den Messwiderstand 41, Verstärker 44, Komparator 45, SOLL-Wertquelle 46, galvanisches Trennelement 47 bewerkstelligt wird. Die galvanischen Trennelemente 30, 31, 47 sind gleich konstruiert und können bei der Firma Hewlett Packard unter der Bestell-Nr. HCPL 2400 als integrierter Stromkreis bezogen werden. Bei Anwesenheit des Ausgangssignales 261 ist der eine Schalter 36 immer im leitenden Zustand, während der andere Schalter 34 nur bei Existenz einer zweiten Bedingung in den leitenden Zustand gebracht wird; wobei gesagt werden muss, dass der Schalter 34 seine Zustände (leitend oder gesperrt) mehrmals während der Zeit ändern kann, in welcher Zeit der Schalter 36 leitend ist, oder anders ausgedrückt, das Ausgangssignal 261 vorhanden ist.

Im Hauptstromkreis fliesst bei einem jeden Arbeitsimpuls (bei Anwesenheit des Ausgangssignales 261) der Strom auf drei verschiedene Wege mit teilweise unterschiedlichen Richtungen. Bei Auftreten des Impulssignales 261 und, wenn im Arbeitsspalt 13 kein oder nur ein kleiner Strom fliesst, gehen die Schalter 34, 36 in den leitenden Zustand über. Der Strom fliesst vom Pluspol der Gleichspannungsquelle 40, die eine Speisespannung von 100 V bis 1000 V haben kann, über Schalter 36, Messwiderstand 41, Leistungsdiode 42 mit einer Sperrverzögerungszeit von 35 Nanosekunden, Leitung 43, die induktionsarm ist und aus HF-Litze geflochten ist, Arbeitsspalt 13, Schalter 34 zum Minuspol der Gleichspannungsquelle 40. Der Messwiderstand gibt den Wert des Stromes über seinen Verstärker 44 zum Komparator 45, der den IST-Wert mit dem SOLL-Wert der SOLL-Wert-Quelle 46 vergleicht. Wenn der IST-Wert unter dem SOLL-Wert liegt, bleibt die Steuerspannung bestehen, welche über das galvanische Trennelement 47 auf den zweiten Eingang des UND-Tores 32 gegeben wird, so dass der Schalter 34 weiterhin leitend ist. Steigt der durch den Widerstand 41 gemessene Stromwert über den SOLL-Wert, so wird die Steuerspannung vom zweiten Eingang des UND-Tores 32 entfernt. Der Schalter 34 ist gesperrt. In diesem Falle fliesst der Strom auf seinem zweiten Weg über die Leistungsdiode 37 mit einer Sperrverzögerungszeit von 35 Nanosekunden. Der Stromfluss über diese Diode ist durch die leichte Spannungserhöhung möglich geworden, die infolge der Streuinduktivitäten der Leitungen 43 und des Arbeitsspaltes 13 bewirkt wurde. Der Strom fliesst von der Leistungsdiode 37 über den leitenden Schalter 36, Widerstand 41, Leistungsdiode 42 mit einer Sperrverzögerungszeit von 35 Nanosekunden, Leitung 43, Werkstück 2, Arbeitsspalt 13 usw. Dieser Strom fliesst solange, bis sein Stromwert unter den SOLL-Wert gesunken ist. Dann wird der Schalter 34 wieder leitend, so dass der Strom wieder auf seinem ersten Weg fliessen kann. Die SOLL-Werte, welche die programmierbare SOLL-Wert-Quelle 46 dem Komparator 45 für den betreffenden Arbeitsimpuls zuleitet, werden von der Microprocessor-Steuerung je nach Arbeitsprogramm zugeleitet. Dies ist durch die Leitungen 461 symbolisert. Die SOLL-Wert-Quelle 46 für die Amplitude der Arbeitsimpulse kann als Digital/Analog Wandler konstruiert sein und ist bei der Firma TEXAS Instruments unter der Bestell-Nr. TLC 7524 als integrierter Stromkreis erhältlich. Der Strom fliesst auf seinem dritten Weg sobald das Ausgangssignal 261 verschwunden ist und die beiden Schalter 34, 36 gesperrt sind. Er fliesst vom Werkstück 2, Arbeitsspalt 13, Elektrode 1, Leitung 43, Leistungsdiode 37 in die Gleichspannungsquelle 40, Leistungsdiode 38 mit Sperrverzögerungszeit von 35 Nanosekunden, Widerstand 41, Leistungsdiode 42. Da die Gleichspannungsquelle 40 eine grosse Kapazität hat und der Strom in entgegengesetzter Richtung in die Quelle fliesst, wird eine extrem steile Abstiegsflanke des Arbeitsimpulses von einigen 1000 Ampères pro Mikrosekunde erreicht.

Der erfindungsgemässe Impulsgenerator wurde anhand der Zeichnung detailliert beschrieben. Es besteht ohne weiteres die Möglichkeit, dass die gezeichneten Bauelemente durch ähnliche ersetzt werden können.

**Patentansprüche**

1. Generator zum funkenerosiven Schneiden metallischer Werkstücke mittels einer Elektrode aus flüssigem oder festem Material, wobei Elektrode (1) und Werkstück (2) durch einen Arbeitsspalt (13) voneinander getrennt sind, welcher Generator einen Hauptstromkreis enthält zum Erzeugen und Übertragen von Impulsen auf Elektrode und Werkstück, wobei dieser Hauptstromkreis drei parallele Strompfade enthält, von denen der eine Strompfad eine Spannungsquelle (40) und die beiden anderen mit dem Arbeitsspalt (13) verbundenen Strompfade je einen schnellen elektronischen Schalter (34,36) und Diode (37,38) in bestimmter Durchlassrichtung für den den Arbeitsspalt (13) durchwandernden Impulsstrom aufweisen, dass zwischen Arbeitsspalt (13) und einer Abschaltevorrichtung (26,30,31,32,34,35,36) ein Abfragemittel (24,25,27,28,29,50,51, 52) zur Ansteuerung der Abschaltevorrichtung (26,30,31,32,34,35,36) angeordnet ist, wobei der Hauptstromkreis keine passiven Leistungselemente aufweist, dadurch gekennzeichnet, dass die Zuleitungen (43) zum Arbeitsspalt (13) induktionsarm ausgebildet sind, dass zwischen den elektronischen Schaltern und Dioden einerseits und in der Zuleitung (43) zum Arbeitsspalt (13) andererseits eilt Messelement (41,44) angeordnet ist, welches die Stromstärke eines jeden Impulsstromes misst und in Zusammenhang mit einem Komparator (45) einen der beiden Schalter (34) während der Laufdauer eines Arbeitsimpulses mindestens einmal beeinflusst- und dem Impulsstrom mindestens eine andere Richtung gibt; und dass das Abtragemittel (24,25,27,28,29,50,51,52) mehrere Niveaus der Amplitude der Arbeitsimpulse als Spannungssignale von jedem auf den Arbeitsspalt (13) wirkenden Impuls während seiner Dauer mehrmals abfragt, und die Abschaltevorrichtung (26,30,31,32,34,35,36) derart ansteuert, dass zur Erzeugung einer steilen Abstiegsflanke der Impulsstrom in die Spannungsquelle (40) zurückfliesst.

2. Generator nach Anspruch 1, **dadurch gekennzeichnet**, dass das in der Zuleitung zum Arbeitsspalt (13) angeordnete und die Stromstärke eines jeden Impulses detektierende Messelement (41, 44) gemeinsam mit einer Stromwert-Soll-Quelle (46) über einen Komparator (45) einen Eingang eines UND-Tores (32) beeinflusst, wobei der andere Eingang des UND-Tores (32) durch einen von dem Abfragemittel angesteuerten, vorprogrammierten Speicher (26) nur dann ein Signal erhält, wenn der den Arbeitsspalt (13) beeinflussende Arbeitsimpuls das gewünschte Entwicklungsmuster enthält.

3. Generator nach Anspruch 1, **dadurch gekennzeichnet**, dass die Abschaltevorrichtung (30 - 36) einen Festwertspeicher (26) mit einem solchen Programm enthält, dass an seinem Ausgang nur dann eine Steuerspannung für den Impuls im Arbeitsspalt (13) entsteht, wenn der Arbeitsimpuls ein gewünschtes und vorgegebenes Entwickdungsmuster besitzt.

4. Generator nach Anspruch 1 und Anspruch 3, **dadurch gekennzeichnet**, dass der Festwertspeicher (26) adressiert wird von folgenden Mitteln: - ein die zeitlichen Abfrageschritte (t1, t2, t3, t4 ...... tN) bestimmender Zähler (24); - ein Speicher (25), der die am Arbeitsspalt (13) sich entwickelnden Niveaus eines Arbeitsimpulses speichert.

5. Generator nach Anspruch 4, **dadurch gekennzeichnet**, dass der die zeitlichen Abfrageschritte bestimmende Zähler (24) von einem Signalkreis angesteuert wird, welcher Signalkreis eine Inpulsquelle (20) mit einer um ein Vielfaches höheren Frequenz als diejenige der Arbeitsimpulse und Frequenzuntersetzerstufen (211, 221) für die Definition der Abfragezeiten während der Breite und der Pause der Arbeitsimpulssignale enthält.

6. Generator nach Anspruch 4, **dadurch gekennzeichnet**, dass zur Messung der Niveaus des Arbeitsimpulses Komparatoren (27, 28, 29) vorgesehen sind, deren einer Eingang am Werkstück (2) und am Druckbehälter (4) der Elektrode (1) und deren anderer Eingang an einer Sollwert-Quelle (53) angeschlossen sind, wobei für jedes Niveau ein Komparator vorhanden ist.

7. Generator nach Anspruch 1, **dadurch gekennzeichnet**, dass der Hauptstromkreis zwei elektronische Schalter (34, 36) enthält, die beide im durchgeschalteten Zustand die Anstiegsflanke eines Arbeitsimpulses erzeugen und die bei gleichzeitiger Sperrung die Abstiegsflanke des Arbeitsimpulses erzeugen.

8. Generator nach Anspruch 1 oder Anspruch 7, **dadurch gekennzeichnet**, dass zur Regelung der Amplitude des Arbeitsimpulses das in der Zuleitung zum Arbeitsspalt (13) vorgesehene Messelement (41, 44) und sein Komparator (45) in Zusammenarbeit mit dem Ausgangssignal des Festwertspeichers (26) einen der beiden elektronischen Schalter (36, 37) betätigt.

9. Generator nach Anspruch 1, **dadurch gekennzeichnet**, dass am Arbeitsspalt mindestens zwei Hauptstromkreise angeschlossen sind und jeder Hauptstromkreis eine Entkopplungsdiode (42) in seiner Leitung zum Arbeitsspalt (13) enthält.

10. Generator nach Anspruch 1 und Anspruch 9, **dadurch gekennzeichnet**, dass bei paralleler Anordnung von Hauptstromkreisen am Arbeitsspalt (13) jeder Hauptstromkreis seine Impulssignale von einem separaten Ausgang des Festwertspeichers (26) erhält.

11. Generator nach Anspruch 1, bestehend aus einem Signalstromkreis und aus mindestens einem Hauptstromkreis, **gekennzeichnet durch** folgende Bauteile:

Der Signalstromkreis enthält:

- einen Oszillator (20) mit hoher Frequenz;
- Untersetzerstufen (21, 22) zur Erzeugung von Elementen, die zu einem Impulssignal gehören;
- einen Zähler (24) zur Adressierung der Impulssignal-Elemente;
- einen Speicher (26) eines die elektrischen Zustände im Arbeitsspalt (13) detektierenden Rückkopplungskreises (27, 28, 29, 50, 51, 52, 53, 531), welcher Speicher jeden Zustand adressiert;

- einen Festwertspeicher (26) mit programmierten Speicherplätzen, die vom Zähler (24) entsprechend der Adressen der Impulssignalelemente und vom Speicher (25) entsprechend der Adressen der elektrischen Zustände im Arbeitsspalt (13) angesteuert werden, wobei die Inhalte der angesteuerten Speicherplätze ein Ausgangssignal (261) oder kein Ausgangssignal erzeugen;

Der Hauptstromkreis enthält:

- Zwei elektronische Schalter (34,36) zur Erzeugung eines Arbeitsimpulses im Arbeitsspalt (13) bei Vorhandensein eines Ausgangssignales (261);
- einen Regelkreis (41, 44, 45, 46, 47, 32), der beim Ueberschreiten eines bestimmten Strompegels im Arbeitsspalt (13) nur einen (36) der beiden elektronischen Schalter (34, 36) sperrt, wobei die Streuinduktivität des Stromkreises den Stromfluss in die neue Richtung ermöglicht, was während eines Arbeitsimpulses mehrere Male geschehen kann;
- eine Anordnung von Leistungsdioden (37, 38, 42) für eine bestimmte Stromflussrichtung in die Gleichspannungsquelle (40) zur Erzeugung einersteilen Abstiegsflanke des Arbeitsimpulses.

## Claims

1. A power supply for the spark-erosion cutting of metal workpieces by means of an electrode made of liquid or solid material, electrode (1) and workpiece (2) being mutually separated by a working gap (13), which power supply contains a main electrical circuit for generating pulses and transmitting them to electrode and workpiece, wherein this main electrical circuit contains three parallel current paths, of which the one current path has a voltage source (40) and the two other current paths, which are connected to the working gap (13), each have a fast electronic switch (34, 36) and diode (37, 88) in a particular forward direction for the pulse current passing through the working gap (13), that disposed between working gap (13) and a switch-off device (26, 30, 31, 32, 34, 35, 36) is a sensing means (24, 25, 27, 28, 29, 50, 51, 52) for triggering the switch-off device (26, 30, 31, 32, 34, 35, 36), the main electrical circuit having no passive power components, **characterised in that** the supply conductors (43) to the working gap (13) are designed with low inductance, **in that** between the electronic switches and diodes, on the one hand, and in the supply conductor (43) to the working gap (13) on the other hand, a measuring device (41, 44) is disposed, which measures the current intensity of each pulse current and, in conjunction with a comparator (45), influences one of the two switches (34) at least once during the operating time of a working pulse and gives the pulse current at least one other direction, **and in that** the sensing means (24, 25, 27, 28, 29, 50, 51, 52) senses several levels of the amplitude of the working pulse as voltage signals from every pulse acting on the working gap (13) repeatedly during its duration, and triggers the switch-off device (26, 30, 31, 32, 34, 35, 38) in such a manner that to produce a steep trailing edge the pulse current flows back into the voltage source (40).

2. A power supply according to Claim 1, **characterised in that** the measuring device (41, 44) disposed in the supply conductor to the working gap (13) and detecting the current intensity of each pulse jointly influences with a current value setpoint source (46) an input of an AND gate (32) via a comparator (45), the other input of the AND gate (32) receiving a signal by means of a preprogrammed memory (26) triggered by the sensing means only if the working pulse influencing the working gap (13) contains the desired development pattern.

3. A power supply according to Claim 1, **characterised in that** the switch-off device (30-36) contains a read-only memory (26) having a program which is such that a control voltage for the pulse in the working gap (13) is produced at its output only if the working pulse has a desired and specified development pattern.

4. A power supply according to Claim 1 and Claim 3, **characterised in that** the read-only memory (26) is addressed by the following means:

- a counter (24) which determines the chronological sensing steps (t1, t2, t3, t4....tN);
- a memory (25) which stores the levels, developed at the working gap (13), of a working pulse.

5. A power supply according to Claim 4, **characterised in that** the counter (24) determining the chronological sensing seeps is triggered by a signal circuit, said signal circuit containing a pulse source (20) having a frequency which is higher by a multiple than that of the working pulses and frequency reducing states (211, 221) for defining the sensing times during the width and the interval of the working pulse signals.

6. A power supply according to Claim 4, **characterised in that**, to measure the level of the working pulse, comparators (27, 28, 29) are provided, the one input of which is connected to the workpiece (2) and to the pressurised container (4) of the electrode (1) and the other input of which is connected to a set-point source (53), a comparator being present for every level.

7. A power supply according to Claim 1, **characterised in that** the main electrical circuit contains two electronic switches (34, 36) which both produce the leading edge of a working pulse in the turned-on state and which produce the trailing edge of the working pulse when turned off simultaneously.

8. A power supply according to Claim 1 or Claim 7, **characterised in that**, to regulate the amplitude of the working pulse, the measuring device (41, 44) provided in the supply conductor to the working gap (13) and its comparator (45) actuates, in conjunction with the output signal of the read-only memory (26) one of the two electronic switches (36, 37).

9. A power supply according to Claim 1, **characterised in that** at least two main electrical circuits are connected to the working gap and each main electrical circuit contains a decoupling diode (42) in its conductor leading to the working gap (13).

10. A power supply according to Claim 1 and Claim 9, **characterised in that**, with a parallel arrangement of main electrical circuits at the working gap (13), each main electrical circuit receives its pulse signals from a separate output of the read-only memory (26).

11. A power supply according to Claim 1, consisting of an electrical signal circuit and at least one main electrical circuit, **characterised by** the following components:

The electrical signal circuit contains:

- a high-frequency oscillator (20);
- reducing stages (21, 22) for producing elements which belong to a pulse signal;
- a counter (24) for addressing the pulse signal elements;
- a memory (26) of a feedback circuit (27, 28, 29, 50, 51, 52) which detects the electrical states in the working gap (13), which memory addresses each state;

- a read-only memory (26) having programmed memory locations which are selected by the counter (24) in accordance with the addresses of the pulse signal elements and by the memory (25) in accordance with the addresses of the electrical states in the working gap (13), the contents of the selected memory locations producing an output signal (261) or no output signal;

The main electrical circuit contains:

- two electronic switches (34, 36) for producing a working pulse in the working gap (13) if an output signal (261) is present;
- a regulating circuit (41, 44, 45, 46, 47, 32) which turns off only one of the two electronic switches (34, 36) if a certain current level is exceeded in the working gap (13), the leakage inductance of the electrical circuit enabling the current flow in the new direction, which may occur several times during a working pulse;
- an arrangement of power diodes (37, 38, 42) for a certain current flow direction in the direct-voltage source (40) for producing a steep trailing edge of the working pulse.

**Revendications**

1. Générateur pour la coupe par électroérosion de pièces métalliques au moyen d'une électrode en matière liquide ou solide, l'électrode (1) et la pièce (2) étant séparées l'une de l'autre par une fente de travail (13), le générateur contenant un circuit principal destiné à produire et à transmettre des impulsions à l'électrode et à la pièce, où ce circuit principal comporte trois voies conductrices parallèles dont une voie conductrice comporte une source de tension (40) et les deux autres voies conductrices, reliées à la fente de travail (13) contiennent chacune un interrupteur électronique rapide (34, 36) et des diodes (37, 38) dans un sens de passage déterminé du courant d'impulsion traversant la fente de travail (13) ; qu'il est disposé entre la fente de travail (13) et un dispositif de coupure (26, 30, 31, 32, 34, 35, 36) un moyen d'interrogation (24, 25, 27, 28, 29, 50, 51, 52) pour commander le dispositif de coupure (26, 30, 31, 32, 34, 36), où le circuit principal ne comporte aucun élément de puissance passif, caractérisé en ce que les lignes d'arrivée (43) vers la fente de travail (13) ont une faible inductance, qu'il est disposé entre les interrupteurs électroniques et les diodes, d'une part, et dans la ligne d'arrivée (43) vers la fente de travail (13), d'autre port, un élément de mesure (41, 44) qui mesure l'intensité de courant de chaque courant d'impulsion et qui influence au moins une fois, en liaison avec un comparateur (45), l'un des deux interrupteurs (34) pendant la durée d'une impulsion de travail et qui donne au moins un autre sens au courant d'impulsion ; et en ce que le moyen d'interrogation (24, 25, 27, 28, 29, 50, 51, 52) interroge plusieurs niveaux de l'amplitude des impulsions de travail comme signaux de tension de chaque impulsion agissant sur la fente de travail (13) pendant sa durée plusieurs fois et commande le dispositif de coupure (26, 30, 31, 32, 34, 35, 36) de façon que pour la production d'un flanc de montée abrupte, le courant d'impulsion retourne dans la source de tension (40).

2. Générateur selon la revendication 1, caractérisé en ce que l'élément de mesure (41, 44), placé dans la ligne d'arrivée à la fente de travail (13) et détectant l'intensité de courant de chaque impulsion, influence, conjointement avec une source de courant de consigne (46), une entrée d'une porte ET (32), par l'intermédiaire d'un comparateur (45), l'autre entrée de la porte ET (32) ne recevant un signal, par une mémoire (26) préprogrammée, commandé par le moyen d'interrogation, que lorsque l'impulsion de travail influençant la fente de travail (13) contient le modèle de développement souhaité.

3. Générateur selon la revendication 1, caractérisé en ce que le dispositif de coupure (30 à 36) contient une mémoire de valeur fixe (26) avec un programme tel qu'à sa sortie il ne s'applique qu'une tension de commande pour l'impulsion, dans la fente de travail (13), que lorsque l'impulsion de travail possède un modèle de développement souhaité et imposé.

4. Générateur selon la revendication 1 et la revendication 3, caractérisé en ce que la mémoire de valeur fixe (26) est adressée par les moyens suivants :

- un compteur (24) déterminant les pas d'interrogation dans le temps (t1, t2, t3, t4 ... tN) ;
- une mémoire (25) qui stocke les niveaux, se développant sur la fente de travail (13), d'une impulsion de travail.

5. Générateur selon la revendication 4, caractérisé en ce que le compteur (24), déterminant les pas d'interrogation dans le temps, est commandé par un circuit de signaux qui contient une source d'impulsion (20) avec une fréquence plusieurs fois supérieure à celle des impulsions de travail et des étages de démultiplication de fréquence (211, 221) pour la définition des temps d'interrogation pendant l'amplitude et la pause des signaux d'impulsion de travail.

6. Générateur selon la revendication 4, caractérisé en ce que pour mesurer les niveaux de l'impulsion de travail, il est prévu des comparateurs (27, 28, 29) dont une entrée est connectée à la pièce (2) et au réservoir sous pression (4) de l'électrode (1) et dont l'autre entrée est connectée à une source de valeur de consigne (53), un comparateur étant prévu pour chaque niveau.

7. Générateur selon la revendication 1, caractérisé en ce que le circuit principal contient deux interrupteurs électroniques (34, 36) qui génèrent tous deux, à l'état connecté, le flanc de montée d'une impulsion de travail et génèrent le flanc de descente de l'impulsion de travail, en même temps qu'ils bloquent le passage du courant.

8. Générateur selon la revendication 1 ou la revendication 7, caractérisé en ce que pour régler l'amplitude de l'impulsion de travail, l'élément de mesure (41, 44), prévu dans la ligne d'arrivée à la fente de travail (13), et son comparateur (45) actionnent, en coopération avec le signal de sortie de la mémoire de valeur fixe (26), l'un des deux interrupteurs électroniques (36, 37).

9. Générateur selon la revendication 1, caractérisé en ce qu'à la fente de travail il est raccordé au moins deux circuits principaux et chaque circuit principal contient une diode de découplage (42) dans sa ligne menant à la fente de travail (13).

10. Générateur selon la revendication 1 et la revendication 9, caractérisé en ce que dans le cas où les circuits principaux sont montés en parallèle, à la fente de travail (13), chaque circuit principal reçoit ses signaux d'impulsion d'une sortie séparée de la mémoire de valeur fixe (26).

11. Générateur selon la revendication 1, constitué d'un circuit de signaux et d'au moins un circuit principal, caractérisé par les composants suivants : Le circuit de signaux contient :

- un oscillateur (20) à haute fréquence ;
- des étages de démultiplication (21, 22) destinés à produire des éléments qui appartiennent à un signal d'impulsion ;
- un compteur (24) pour adresser les éléments de signaux d'impulsion ;
- une mémoire (26) d'un circuit de rétro-action (27, 28, 29, 50, 51, 52, 53, 531), détectant les états électriques dans la fente de travail (13), cette mémoire adressant chaque état ;
- une mémoire de valeur fixe (26) avec des zones de mémoire programmées qui sont commandées par le compteur (24), en fonction des adresses des éléments de signaux d'impulsion et par la mémoire (25), en fonction des adresses des états électriques dans la fente de travail (13), le contenu des zones de mémoire commandées générant un signal de sortie (261) ou aucun signal de sortie ;

Le circuit principal contient

- deux interrupteurs électroniques (34, 36) destinés à produire une impulsion de travail dans la fente de travail (13) en présence d'un signal de sortie (261) ;
- un circuit de réglage (41, 44, 45, 46, 47, 32) qui, lorsqu'un niveau de courant déterminé est dépassé dans la fente de travail (13), ne ferme que l'un (36) des deux interrupteurs électroniques (34, 36), l'inductance de fuite du circuit permettant au courant de s'écouler dans le nouveau sens, ce qui peut survenir plusieurs fois au cours d'une impulsion de travail ;
- un agencement de diodes de puissance (37, 38, 42) pour un sens d'écoulement déterminé du courant dans la source de tension continue (40), afin de produire un flanc de montée abrupt de l'impulsion de travail.